# EUROPEAN PATENT SPECIFICATION

(11) **EP 3 259 660 B1**
(45) Date of publication and mention of the grant of the patent: **08.01.2020**
(21) Application number: 16721084.8
(22) Date of filing: 19.02.2016
(51) Int. Cl.: G06F 3/0488, G06F 3/044, G06K 7/08, G06K 19/067

(54) **SELF-GROUNDING CAPACITIVE INFORMATION CARRIER AND ITS USE**
SELBSTERDENDER KAPAZITIVER INFORMATIONSTRÄGER UND DESSEN VERWENDUNG
SUPPORT D'INFORMATIONS CAPACITIF DE MISE À LA TERRE AUTONOME ET SON UTILISATION

(30) Priority: 19.02.2015 EP 15155759
(43) Date of publication of application: 27.12.2017
(73) Proprietor: Touchcode Technologies, LLC, New York NY 10019 (US)
(72) Inventor: THIELE, Jan, 09224 Chemnitz/Grüna (DE); VOIGT, Sascha, 09337 Bernsdorf (DE); WEIGELT, Karin, 09112 Chemnitz (DE); FÖRSTER, Matthias, 01307 Dresden (DE)
(74) Representative: Hoffmann Eitle
(86) International application number: PCT/EP2016/053564
(87) International publication number: WO 2016/131963

(56) References cited:
- EP-A1- 2 458 526
- US-A1- 2014 125 614

## Description

The invention relates to a capacitive information carrier in which information is encoded by an information pattern comprising a first and a second electrically conductive area on an electrically non-conductive substrate, wherein each conductive area comprises one or more sub-sections, wherein said information is detectable by a capacitive touch screen comprising intersection points formed from driving electrodes and sensing electrodes. In a further aspect, the invention relates to a system comprising a touch screen which comprises intersection points formed from driving electrodes and sensing electrodes and a capacitive information carrier. Furthermore, the invention relates to a use of the capacitive information carrier and the system.

### Background of the invention

In the prior art, multi touch screen devices, such as e.g., smartphones, smart watches or tablets, are described that work according to the mutual capacitance working principle. These conventional multi touch sensors are built up from driving lines and sensing lines. The driving lines serve as transmitters and the sensing lines serve as receivers for the detection of changing capacitance values at intersection points where the electrode lines cross. Usually, the driving lines and the sensing lines of a touch sensor are arranged in a perpendicular way. One driving line is set to a certain electrical potential when the touch sensor is used and switched on. A touch controller determines the capacitance of the intersection points between the active driving line and each sensing line. In the context of the present invention, it is preferred to synonymously use the term "sensing line" and "sensing electrode" and "driving line" and "driving electrode" accordingly.

If a fingertip of a human user or another grounded conductor is arranged in proximity to the intersection point of the driving and the sensing lines, the capacitance at the sensing line is reduced. It is a well-known fact in the technical field of multi touch sensors, that a touch event is triggered if the detected capacities at the sensing line is reduced to an extent that it falls below a pre-defined threshold value.

In WO 2011/154524 A1, capacitive information carriers are described comprising structured information layers or touch structures. These touch structures may comprise structurally and functionally different components which may be referred to as touch points, coupling areas and/or conductive lines. Preferably, the touch points of these information carriers are connected to a coupling area that may be touched by a human user to detect and interpret the information encoded in the electrically conductive touch structure by a touch screen device. Basically, the information carriers described in the prior art consist of one electrically conductive touch structure, which may also be referred to as electrically conductive pattern, on a non-conductive substrate material, like paper or plastic film. It is known that such information carriers can be produced by highly efficient printing processes. It is also known in the prior art that a human user may be replaced by a contact between the electrically conductive pattern and a grounded object in order to achieve a grounding of the information carrier. Another example of such capacitive information carriers is disclosed in US 2014/125614 A1.

It is known that electrically conductive elements of an electrically conductive structure may cause a reaction on a touch screen. In the context of the present invention, such reactions are preferably called touch events. In order to generate touch events, it is necessary that, e.g., a human user, couples in his or her body capacitance to the electrically conductive structure by touching at least one element or part of the structure. This contact between a human user and an electrically conductive touch structure may lead to a grounding which allows for the detection of the electrically conductive elements of the electrically conductive structure. A detection of these electrically conductive elements will not take place if the touch structure is not grounded. Accordingly, the touch structure to be detected has to be touched by a human user in order to be recognized by a touch screen which may represent a drawback of conventional information carriers known from the prior art.

In the context of the present invention, a grounded object may for example be the ground of the multi touch screen device or the ground of the battery of the multi touch screen device. In order to trigger touch events on a touch screen by the use of a human finger, a capacitive stylus and/or a capacitive information carrier, it is necessary to ground the electrically conductive object. This preferably means that the capacitance of an electrically conductive object is adjusted to the body capacitance of a human user or any kind of device ground. A person skilled in the art knows that this grounding can be achieved by touching the object which shall be detected or to connect the object to a device ground in order to trigger touch events on the touch screen.

One conventional way to ground an electrically conductive object, e.g., an electrically conductive stylus designed for the operation of capacitive touch screens, is to provide a direct contact between a human user and the electrically conductive object to be grounded. This contact may typically be established by the human user touching the electrically conductive object with one or more fingers. It is known that human beings have a characteristic body capacitance which influences the capacitance of the electrically conductive object to be grounded. It is known to a person skilled in the art that a similar grounding effect can be achieved by the use of an active or passive stylus when the electrically conductive stylus is coupled either capacitively or galvanically to the body capacitance of a human user.

In the context of the present invention, it is preferred that the term "grounding of an object" preferably enables the touch screen to detect touch events which are triggered by certain electrically conductive elements of an electrically conductive structure. In the context of the present invention, it is also preferred that the terms "touch screen" and "touch sensor" are used synonymously.

It is a draw-back of conventional touch screen technologies that the application range of the objects to be detected by a touch screen is limited by the need to touch the electrically conductive object or the need to provide a connection between the object and a device ground. It would be appreciated by a person skilled in the art if objects or methods can be provided that can do without any grounding means, such as e.g., the touch of human fingertips or the connection to any ground device.

It is therefore the object of the present invention to provide an information carrier and a system that do not have the drawbacks and disadvantages described in the prior art and which does not need to be touched by a human user or connected to any device ground in order to be grounded.

### Summary of the invention

The object of the invention is solved by a capacitive information carrier in which information is encoded by an information pattern comprising a first and a second electrically conductive area on an electrically non-conductive substrate, wherein each conductive area comprises one or more sub-sections, wherein said information is detectable by a capacitive touch screen comprising intersection points formed from driving electrodes and sensing electrodes wherein at least one sub-section of the second electrically conductive area connects at least two sub-sections of the first electrically conductive area and the at least two sub-sections of the first electrically conductive area cover at least two different intersection points of the touch screen when brought into contact with said touch screen, said two different intersection points of the touch screen corresponding to two different driving electrodes of the touch screen, wherein the capacitive information carrier is a self-grounding carrier due to the arrangement of the electrically conductive areas.

It was totally surprising that an information carrier can be provided which may be grounded without being touched by a human user or connected to any device ground. In the context of the present invention an information carrier that can be grounded without being touched by a human user and without being connected to any device ground is preferably referred to as "self-grounding". The self-grounding effect of the information carrier according to the present invention is achieved by the arrangement of the components, in particular the electrically conductive elements, of an information pattern on an electrically non-conductive substrate. Preferably, the electrically conductive elements of the information pattern comprise the first and the second electrically conductive area.

In the case that the first electrically conductive area comprises only two subsections, it is preferred that the second electrically conductive area is formed from a single sub-section, so that this single sub-section represents the total second electrically conductive area.

The present invention relates to an information carrier in which information is encoded in an information pattern. It is preferred that the information is, for example, encoded in the arrangement, position, dimensions, distances, shape, and/or size of the information pattern and/or the different components of the information pattern. In the context of the present invention, it is preferred that the information is particularly encoded by the overall shape of the first electrically conductive area and/or the second electrically conductive area, the distance of sub-sections of the first electrically conductive area to each other, the position and/or arrangement of said sub-sections on the information carrier, the angles which are enclosed by virtual lines connecting said sub-sections and/or the number of sub-sections of the first electrically conductive area.

According to the present invention, it is preferred that the information pattern consists of a first and a second electrically conductive area wherein said electrically conductive areas are applied on an electrically non-conductive substrate. It is preferred that the first electrically conductive area comprises at least two subsections which may preferably correspond to the so-called "touch points" described in the prior art. In the context of the present invention, the terms "touch points", "touch-inducing areas" and "sub-sections of the first electrically conductive area" will be used synonymously. It is preferred that the second electrically conductive area also consists of sub-sections which may preferably correspond to connecting lines or conductive traces which connect the sub-sections of the first electrically conductive area with each other. In the context of the present invention, it is preferred that the information which is encoded in the information pattern can be detected by a capacitive touch screen device.

In the context of the present invention, a capacitive touch screen device preferably comprises a touch screen with driving electrodes and sensing electrodes wherein these electrodes preferably form intersection points. In the context of the present invention, the term "intersection point" refers to the crossing point of driving electrodes and sensing electrodes of the touch screen of a capacitive touch screen device. In some touch screen devices, driving lines and sensing lines of the touch sensor are arranged perpendicularly to each other. This preferably means that the driving lines and the sensing lines of the touch screen enclose essentially right angles of about 90°. A person skilled in the art knows that the term "right angle" comprises also angles in proximity to 90° and that deviations from a right angle may occur due to manufacturing inaccuracies.

In some other touch screen devices, the driving and sensing lines of the touch sensor do not run parallel and/or perpendicularly, but may be arranged on the touch screen in any conceivable pattern and/or arrangement, e.g., designed as hexagons or diamond-shaped. It is noted that a self-grounding information carrier as described herein still works if different intersection points of the touch screen device are covered. These touch screen devices are preferably also covered by the term "touch screen device" in the sense of the present invention and they are preferably part of the system. Also other "touch screen layouts" can be used as long as different intersection points can be covered by electrically conductive areas of the self-grounding information carrier.

It was totally surprising that the self-grounding effect of the information carrier according to the present invention can be achieved by the application of certain design rules for the arrangement of the components of the information pattern on the electrically non-conductive substrate. This is particular true for the electrically conductive elements. It came as a surprise that a self-grounding information carrier can be provided where at least one sub-section of the second electrically conductive area connects at least two sub-sections of the first electrically conductive area and the at least two sub-sections of the first electrically conductive area cover at least two different intersection points of the touch screen when the information carrier is brought into contact with the touch screen of the capacitive touch screen device.

For some applications, it may be preferred that the term "different intersection points" relates to two intersection points adjacent to each other, i.e., located either horizontally or vertically on the same driving or sensing electrode. For other applications, it may be preferred that the term "different intersection points" refers to two intersection points that are formed by at least two different driving and at least two different sensing electrodes. As an example, this may include two sub-sections of the first electrically conductive area which do not share a single electrode, neither in vertical, nor in horizontal direction. This preferred embodiment may also be referred to as "diagonal arrangement" of the information pattern on the touch screen. It is noted that the present invention comprises the two preferred embodiments described in this paragraph.

Persons skilled in the art and working in the technical field of touch screen technologies had thought so far that any electrically conductive object which shall be detected by a touch screen has to be touched by a human user or have to be connected to any device ground in order to trigger events on a touch screen. It was therefore totally surprising that an additional way to ground a capacitive information carrier, in particular an electrically conductive pattern, can be provided which overcomes the need for a connection to a device ground or the touch of a human user. Experts in the technical field of information carrier technologies had thought that capacitive information carriers have to be provided with a coupling area that can be touched by a human user or any other electrically conductive object in order to influence the capacitance of the touch screen. To provide a self-grounding capacitive information carrier therefore represents a departure from the conventional design of information carriers comprising coupling areas. The self-grounding information carrier according to the present invention provides an alternative way of grounding which had so far not been known or thought of.

The inventors have found that it is possible to ground a part of the electrically conductive information pattern to another area on the same touch sensor.

Advantageously, self-grounding capacitive information carriers according to the present invention can preferably be produced using highly efficient printing processes, which enables a cost-efficient manufacturing.

It was totally surprising that it is possible to detect the sub-sections of the first electrically conductive area without any external grounding. This object of the present invention is advantageously achieved by the design of the information pattern according to the present invention where the distance between the touch-inducing areas is sufficiently large so that at least two sub-sections of the first electrically conductive area overlap with different intersection points formed from driving lines and sensing lines of the touch screen. The inventors of the present invention have found that when a driving electrode, which is located underneath a first touch point covering a first intersection point, is active, and a driving electrode underneath a second touch point that is connected to the first touch point and covers a second intersection point, is inactive, the second touch point has a capacitive coupling to the device ground. It was totally surprising that this ground coupling, which is advantageously achieved by a capacitive information carrier wherein at least one sub-section of the second electrically conductive area connects at least two sub-sections of the first electrically conductive area and the at least two sub-sections of the first electrically conductive area cover at least two different intersection points of the touch screen, is sufficient to reduce the capacitance at the intersection point of the first touch point. It was not to be expected that the capacitance would fall below a pre-defined threshold value so that the state of capacitance may be referred to as grounded. It came as a surprise that it is not necessary to provide a connection to a body capacitance of a human user if a first touch point is located on top of an active driving electrode and a second touch point that is connected to the first touch point is located on top of an inactive driving electrode.

Inventors have also found that this first application example works best if the information pattern is arranged diagonally on the touch screen wherein the term "diagonally" is used as defined above. That means that at least two touch points overlap with intersection points formed from different driving and different sensing electrodes of the touch screen. As described above, this preferably means that two intersection points do not share a single electrode they are arranged on, i.e., two touch points are not arranged on identical electrodes, neither in vertical, nor in horizontal direction, which preferably means that the at least two sub-sections of the first electrically conductive area cover at least two different intersection points of the touch screen.

To recognize a conductive pattern described herein, it is preferred that the complete pattern of the self-grounding information carrier is placed on top of a multi touch screen. Due to the working principle of a capacitance multi touch screen device, one touch point of the self-grounding information carrier is located on top of an intersection point between a currently active driving electrode and a sensing electrode at a defined time. This situation preferably occurs in the course of the scanning of the touch screen. The inventive achievement of the inventors is represented by recognizing that a grounding can easily be realized by placing the self-grounding information carrier on the touch screen and making use of the short period of time within the inherent scanning process of the touch screen where one touch point of the information pattern is located on top of a currently active driving electrode whereas the other touch point(s) are located on top of inactive driving electrodes. Preferably, an electrical field exists between the currently active driving electrode and the sensing electrodes. The electrical field at this intersection is advantageously decreased wherein this procedure is referred to as "electrical charges are stolen" in the context of the present invention.

This decrease is preferably registered by the touch controller. In the context of the present invention, this preferably means that electrical potential of the touch point, which is located on top of the active driving electrode, is changed. As it is preferred that the components of the information pattern are electrically or galvanically linked to each other by the connecting lines, the electrical potential of the whole information pattern is preferably changed. It is further preferred that the information pattern has a capacitive coupling to ground, in particular by those touch points which are not located on top of the active driving electrode. It is particularly preferred that those touch points, which are located on top of the intersection points of non-active driving lines and sensing lines, contribute to the grounding of the information carrier so that the surprising grounding effect occurs which is referred to as a "self-grounding effect" in the context of the present invention.

The inventors have surprisingly found that this grounding process works best if the touch points of the information pattern are located on intersection points of at least two different driving electrodes and at least two different sensing electrodes, i.e., if at least two touch points are located on non-identical driving and sensing lines, i.e., non-identical vertical or horizontal electrodes of the touch screen. For other purposes, it may, however, be preferred if the touch points share one electrode, i.e., they lie on identical vertical or horizontal electrodes, i.e., driving or sensing lines.

Advantageously, the sub-sections of the second electrically conductive area do also contribute to the grounding effect. It is therefore preferred that connecting lines which are located on top of intersection points of inactive driving electrodes and sensing electrodes contribute to the grounding of the information pattern, thereby supporting the detection of the sub-section of the first electrically conductive area which is located on top of the intersection point of the currently active driving electrode and sensing electrodes.

Advantageously, the self-grounding effect of the information carrier according to the present invention leads to the opportunity that additional coupling areas for grounding an information carrier according to the prior art may be omitted. By omitting the coupling area, the designer of an information pattern has an enhanced degree of freedom in creating information patterns. Furthermore, this leads to costs savings in a surprising range since there is no conductive material needed for a coupling area.

It can be described as a draw-back of information carriers according to the prior art that the desired detection of the touch points may be disturbed by the functionally necessary, but interfering elements of a conventional touch structure, i.e., the connecting lines and coupling areas. This is due to deviation effects which may occur by the electrically conductive masses of the necessary, but interfering components. The deviations caused by the coupling area are due to the positions of the touch points recognized by the touch screen which is shifted into the direction of the coupling area. When at least one of these necessary, but interfering components, namely the coupling area, can be omitted as an achievement of the present invention, these undesired deviation effects can significantly be reduced as only the connecting lines remain as necessary, but interfering components.

Furthermore, deviations caused by an accidental positioning of the coupling area on the touch screen is effectively prevented as no coupling area is present on the information carrier according to the present invention. By reducing these distortions and deviations to an extent that was not predictable for a person skilled in the art, the detection preciseness of the touch points of the information pattern can surprisingly be enhanced. This is particularly helpful as the coupling area typically represent a relatively large area which is usually completely filled with electrically conductive material. Therefore, it has a large deviation effect on the detection of the touch points encoding the information by their arrangement, position, distance to each other, size, shape, numbers, geometry and/or angles which are enclosed by virtual lines connecting the touch points.

By omitting this large mass of electrically conductive material, the information encoded within the information carrier may advantageously be detected with an enhanced preciseness and an improved resolution that was not to be expected. Thereby, the tolerances and minimal distances between similar touch patterns may significantly be reduced, leading to a faster and more precise and reliable detection process.

Advantageously, a self-grounding information carrier can be placed without any restriction on any area of the touch screen device instead of touching a defined coupling area. State-of-the-art information carriers have to be placed on the touch screen so that preferably the touch points are in contact with the touch screen. The coupling area shall not be placed on the touch screen when conventional information carriers are used. By omitting the coupling area, there are advantageously no restrictions regarding the placement of the information carrier on the touch screen. This contributes to a surprisingly strong improvement of the detection since handling errors can almost be excluded. For example, any deviations, which might have occurred if a user places the coupling area or at least parts of it on the screen, are prevented. In the prior art, this might have led to render the detection of conventional information carriers impossible due to the deviations caused by the contact of the coupling area to the touch screen.

Furthermore, the complete area available for the information carrier may advantageously be used for the information pattern, e.g., on such small areas, which would not allow the additional integration of a coupling area. That means, that the number of different information patterns on the same area can significantly be increased by omitting the coupling area. Furthermore, this opens up additional application areas for the information carrier described herein.

Advantageously, a self-grounding capacitive information carrier may also overcome detection issues caused by protective cases. Typically, protective cases exhibit a framed elevation circumventing the touch screen to prevent damages in case the device falls to the ground. It is known from the prior art that such cases may hinder a flat placement of the touch pattern, in particular the touch points, on a touch screen.

This is due to the typical layout of touch patterns known from the prior art, wherein the coupling area needs to be touched by a user, but is not supposed to be brought into contact with the touch screen. If no coupling area is needed, the entire information pattern may advantageously be placed flat on the touch screen. This further leads to a more reliable and faster detection.

In a further preferred embodiment of the invention, the information carrier is placed entirely on the touch screen device. For conventional information carriers known from prior art it is preferred to arrange the information carrier onto the touch screen wherein the coupling area is not in contact with the touch screen. For self-grounding information carriers, the information carrier can advantageously be placed entirely on the touch screen so that the whole area of the information carrier may be present on top of the touch screen.

In the following, preferred embodiments of the present invention will be described. It is noted that the dimensions and sizes which are mentioned in the description of the preferred embodiments are related to current state of the art touch screen dimensions. Typically, the distance of driving lines is in a range of about 5 mm. The pitch of sensing lines is also in the range of about 5 mm. It is preferred that these dimensions are related to the detection of finger tips and common gestures which are used to operate a touch screen, for example pinch zoom or the like. It is noted that the description of the preferred embodiments of the present invention also refers to touch screens evolving in the future or touch screens with smaller or larger dimensions wherein the dimensions of the embodiments can be adjusted according to future touch screen development.

In a further aspect, the invention relates to a capacitive information carrier wherein at least two sub-sections of the first electrically conductive area are located on top of intersection points formed from at least two different driving electrodes and at least two different sensing electrodes. Tests have shown that a self-grounding information carrier according to this preferred embodiment does not need a specific or predefined coupling area and that the recognition preciseness of the information encoded in the information pattern of the information carrier can surprisingly be improved. It came as a surprise that providing information carriers where the sub-sections of the first electrically conductive area cover at least two different intersection points does not only enable omitting the coupling area, but may also advantageously improve the quality and preciseness of the recognition process of the information encoded the information pattern of the information carrier.

The preferred arrangement of the at least two sub-sections of the first electrically conductive area with regard to the driving and sensing lines of the touch screen preferably creates a set of design rules for the components of the information pattern. This means in the context of the present invention that the components of the information pattern are preferably arranged on the electrically non-conductive substrate so that the touch points are located on top of intersection points formed from at least two different driving electrodes and at least two different sensing electrodes. Thus, an unpredictable, synergetic effect is achieved by the interaction of the self-grounding information carrier designed in accordance with the design rules which are imposed by the touch screen design with regard to the driving and sensing lines on the touch screen. It is preferred that the information carrier is considered as second component of the system according to the present invention.

The synergetic effect consists in that a surprising self-grounding effect occurs when the self-grounding information carrier is brought in contact with a touch screen wherein at least two touch points are located on at least two different driving electrodes and at least two different sensing electrodes. Advantageously, due to this self-grounding effect, it is no longer necessary that an information carrier needs a coupling area that has to be touched by a human user. Thus, the use of the self-grounding information carrier is facilitated, as the information carrier can be placed freely on the touch screen device. This advantageously gives the user of the self-grounding information carrier more flexibility and freedom to operate the self-grounding information carrier.

In the context of the present invention, the grounding is particularly affected by the capacitive interaction between the electrically conductive areas of the self-grounding information carrier and the electrodes of the touch screen. Inventors have found that the grounding effect can be realized by placing the self-grounding information carrier on the touch screen and making use of the short period of time within the inherent scanning process of the touch screen.

Preferably, a second touch point has a capacitive coupling to the device ground, if a driving electrode, which is located underneath a touch point covering a first intersection point, is active, and a driving electrode underneath a second touch point which is connected to the first touch point and covers a second intersection point, is inactive. It was totally surprising that this ground coupling is sufficient to reduce the capacitance at the intersection point of the first touch point. It was not to be expected that the capacitance at the intersection point would fall below a pre-defined threshold value so that the state of capacitance may be referred to as grounded.

In a further preferred embodiment of the invention, the capacitive information carrier is grounded by bringing the information carrier into contact with the touch screen, wherein the grounding is substantially effected by the capacitive interaction between the electrically conductive areas of the information carrier and the electrodes of the touch screen.

In a further preferred embodiment of the invention, at least one additional electrically conductive element is arranged on the touch screen and wherein said additional electrically conductive element covers at least a further intersection point that is not covered by the first or second electrically conductive area. Preferably, the additional electrically conductive elements may be placed on the touch screen. It is preferred that these additional electrically conductive elements further contribute to the self-grounding effect.

For some applications, the additional electrically conductive element may preferably be connected to a component of the electrically conductive pattern. For example, an additional electrically conductive element may be represented by an electrically conductive line which is connected to a component of the touch pattern only at one end of the additional electrically conductive line. It is noted that these additional electrically conductive lines differ from the conductive connecting lines which connect touch points. In the context of this preferred embodiment, it may therefore be preferred to refer to these electrically conductive lines as dashed lines.

Furthermore, it may be preferred that additional electrically conductive designs are printed behind the conductive pattern or surrounding the pattern, e.g., grid designs, a honeycomb pattern or a logo arrangement. Even if these additional electrically conductive elements are connected to the pattern, they will not trigger events on a touch screen which may interfere with the detection of the self-grounding code pattern, but surprisingly further contributes to the self-grounding of the information carrier. This is due to the effect that further driving and sensing electrodes may be covered by these elements. By the application of additional electrically conductive elements on the self-grounding information carrier, further areas of the touch screen are affected and contribute to the grounding effect. This surprisingly supports the grounding of the complete information pattern and may advantageously lead to a more precise detection. Due to the specific design of the additional electrically conductive elements, e.g., their dimensions, spatial relation to the electrically conductive pattern and/or shape, these further electrically conductive elements will advantageously not trigger touch events. In the context of the present invention, the term "spatial relation" preferably refers to the arrangement of the additional elements with relation to the information pattern. It may be preferred that the elements in the background, e.g., logos, are not hidden later for decorative purposes.

Other electrically conductive objects which may contribute to the grounding are selected from a group of, but without being limited to, electrically conductive clip devices, electrically conductive tapes or the like. Although being detected as touch event if located on top of the intersection between an active driving electrode and sensing electrode, these touch events will surprisingly not interfere with the detection of the code pattern since they will be calculated as touch events being different from touch events generated by touch points by an appropriate software. Preferably, this software runs on the touch screen device.

In a preferred embodiment of the invention, the information is encoded by the shape, geometry and/or size of the information pattern and/or by the arrangement, distances, numbers and/or relative positions of the sub-sections of the first electrically conductive area on the electrically non-conductive substrate.

In a further preferred embodiment of the invention, the sub-sections of the first electrically conductive area have dimensions in a range of preferred 1 to 20 mm, more preferred 6 to 10 mm and most preferred 7 to 9 mm. Touch points with small dimensions advantageously enable for a larger number of codes which can be applied to an information carrier with a pre-determined size. Smaller information carriers and smaller touch points lead to surprisingly reduced production costs as less electrically conductive material has to be used in order to apply the electrically conductive elements of the touch structure.

Touch points with larger dimensions advantageously show surprisingly strong self-grounding effects which were not to be expected by persons skilled in the art. The inventors have found that the strength of the capacitive coupling effect is in linear proportion to the overlapping area on the touch screen which is preferably represented by the sum of the areas of the touch points, the areas of the conductive traces and optionally by additional electrically conductive elements.

The production of prototypes of the self-grounding information carriers according to the present invention have shown that the sub-sections of the first electrically conductive area can be distributed particularly evenly on the electrically non-conductive area when the sub-sections of the first electrically conductive area have dimensions in a preferred range of 6 to 10 mm. By this, the production of the information carrier is facilitated because of the even distribution of the sub-sections of the first electrically conductive area on the electrically non-conductive substrate.

The inventors have also found that advantageously at least two different intersection points are covered or at least touched if the dimensions of the touch points are larger than 5 mm. A preferred size of 10 mm has shown to advantageously provide a good coverage of the electrodes of the touch screen and still enables a large variety of different code patterns and designs.

Further tests have shown that the detection quality of touch points, i.e., the subsections of the first electrically conductive area, can be increased to an unpredictable extend when the dimensions of sub-sections of the first electrically conductive area are in the range of 7 to 9 mm. This is due to the fact that sub-sections with dimensions in the range of 7 to 9 mm resemble surprisingly well the size and dimensions of human fingertips, for which capacitive touch screen devices are designed. It is therefore preferred to provide self-grounding capacitive information carriers with sub-sections of the first electrically conductive area with dimensions in the range of 7 to 9 mm where the arrangement, size, shape and/or geometry of the sub-sections of the first electrically conductive area emulates the arrangement and/or properties of finger tips so that the effect of the touch inducing sub-sections are preferably similar to the effect of human finger tips on a touch screen.

In a further preferred embodiment of the invention, the sub-sections of the first electrically conductive area have at least one symmetry axis. Tests have shown that symmetrical sub-sections of the first electrically area are easiest to detect for a touch screen as they resemble the form, shape, size, dimension, and/or geometry of finger tips best. It is preferred that the shape of single sub-sections of the first electrically conductive area may be selected from a group comprising an ellipse, a square, a star, a rectangle, a polygon or any free form, without being limited to these shapes. It is preferred that the electrically conductive connecting lines forming the sub-sections of the second electrically conductive area connect the sub-sections of the first electrically conductive area galvanically.

In a further preferred embodiment of the invention, at least one sub-section of the second electrically conductive area has a width in a preferred range of 0.1 - 4.0 mm, more preferred 0.2 - 2.0 mm and most preferred 0.5 - 1.0 mm.

Advantageously, wider connecting lines are preferred when a robust information carrier is desired which is preferably capable of withstanding contamination and/or mechanical destruction. As another advantage of the present invention, connecting lines of 1 mm or more contribute in a surprisingly strong way to the self-grounding effect of the information carrier and enhance their detection significantly. The upper limit of 4 mm is not chosen arbitrarily. It has been found that connecting lines having a width of more than 4 mm may be detected by the touch controller of the touch screen as a touch point which is undesired as the appearance of the electrical pattern might be changed by such an undesired touch point.

On the other hand, it has been found that sub-sections of the second electrically conductive area having a width of smaller than 1 mm are less material-intensive and may be used in application fields where production costs are highly important. Furthermore, it came as a surprise that the quality of the connection between the sub-sections of the first electrically conductive area by sub-sections of the second electrical conductive area is not reciprocally proportional to the width of the sub-sections of the second electrical conductive area. Instead, connecting lines with a width in a range of 0.1 -1 mm enable a strong and reliable connection between two sub-sections of the first electrically conductive area. A width in said preferred range ensures that preferably no undesired touch events are triggered.

In a further preferred embodiment of the invention, at least one sub-section of the second electrically conductive area is straight and/or curved. In the context of the present invention, the term "straight" means that a sub-section of the second electrical conductive area represents the direct and shortest connection between the centers of two sub-sections of the first electrical conductive area. The term "curved" refers to sub-sections of the second electrically conductive area that may comprise any free hand form which does not represent the shortest possible connection between two sub-sections of the first electrically conductive area and which may comprise curvatures, straight sections and/or any combination thereof.

It has been found that straight lines may be preferred for applications where the shortest distance between two sub-sections of the first electrical conductive area shall be used in order to establish a connection. This may especially apply for information carriers with limited space.

For other purposes, it may be preferred to use sub-sections of the second electrically conductive area which are curved. When using curved connecting lines in order to connect two touch points, the length of said connecting line will be longer than a corresponding straight connecting line. Because of the greater length of the connecting line and the greater amount of electrically conductive material respectively, the grounding effect of the curved connecting lines is larger compared to the use of straight connecting lines.

Furthermore, by the use of curved connecting lines the area that contributes to the grounding is sufficiently larger. This is due to the effect that further driving and sensing electrodes are covered by the arrangement and position of the electrically conductive subareas of the second area. In other words, the curved connecting lines cover areas that are not affected by straight connecting lines. This surprisingly supports the grounding of the complete information pattern additionally and leads to a more precise detection. It may also be preferred that some connecting lines are straight, whereas others are curved so that a combination of curved and straight connecting lines is used.

In a further preferred embodiment of the invention, the capacitive information carrier is a flat or a spatial object. In the context of the present invention, the term "flat" refers to card-like information carriers such as entrance tickets, collecting cards, advertising cards and/or marketing cards whose height is small compared to the length and the width of said information carrier. In a preferred embodiment of the invention, the information carrier may comprise a thickness in a range of 0.05 to 1.5 mm.

In the context of the present invention, a spatial object is a 3D object where the height, the lengths and the width of the object are preferably each larger than 1.5 mm. A person skilled in the art knows the difference between a flat object and a spatial, i.e., a 3D, object.

In a further preferred embodiment of the invention, a clearance between adjacent sub-sections of the first electrically conductive area is preferred at least 6 mm and most preferred at least 8 mm. In the context of the present invention, it is preferred to use the terms "distance" and "clearance" synonymously. It is preferred that the distance between the sub-sections of the first electrically conductive area may advantageously depend on the size of the information carrier, the size of the sub-sections of the first electrically conductive area and the number of sub-sections applied to the electrically non-conductive substrate. It is preferred that the distance between two different sub-sections is defined as the shortest possible distance between two subsections. It is understood that a preferred clearance between 8 to 30 mm enables for a large variety of different information patterns where the sizes of the sub-sections of the first electrically conductive area and the clearances between the sub-sections may vary.

For other applications, it may be preferred, that the dimensions of the touch points and the clearances are constant. It may be preferred that the sub-sections of the first and the second electrically conductive area, i.e., the components of the information pattern, merge with a graphic and/or decorative design of the front side and/or the back side of the information carrier according to the present invention, if the electrically conductive components of the information carrier are not over-printed with additional layers, e.g., decorative layers. Clearances between the sub-sections of the first electrically conductive area in a range of 15 to 20 mm have shown to resemble the arrangement and/or properties of finger tips especially effectively, as these distances typically occur when two finger tips are placed on a touch screen. Clearances in this range are therefore particularly easy to detect for a touch screen enhancing the detection quality of the information pattern and the information encoded.

In a further preferred embodiment of the invention, the self-grounding capacitive information carrier comprises 2 to 5 sub-sections of the first electrically conductive area. The preferred number of touch points in the range of 2 to 5 is advantageously applied to the electrically non-conductive substrate when the self-grounding capacitive information carrier according to the present invention is used in connection with a smartphone as a touch screen device. It is known to a person skilled in the art that the touch screen area of a smartphone is smaller than the touch screen area of, for example, a tablet PC. If the self-grounding capacitive information carrier is used in connection with a tablet PC as a touch screen device, it is therefore preferred that the self-grounding information carrier comprises 2 to 11 touch points, i.e., sub-sections of the first electrically conductive area. Preferably, the number of sub-sections of the first electrically conductive area corresponds to the size of the touch screen area and the size of the information carrier. It is noted that the given numbers refer to touch screen areas of touch screen device at the time when the invention was made. It is understood that the amount of sub-sections forming the information pattern may change with alternating touch screen sizes of touch screen devices to be developed in the future. The present invention covers self-grounding information carriers which may be used with these touch screen devices, too. This statement applies to all dimensions and descriptions given for encoding information in the context of the present invention.

In a further preferred embodiment of the invention, the first and second electrically conductive area are applied on an electrically non-conductive substrate by printing processes and/or foil transfer methods.

Preferably, the self-grounding information carrier is manufactured by methods selected from a group comprising, but not limited to, additive printing methods, flexographic printing, offset lithography, screen printing, gravure printing, intaglio, printing, inkjet printing, pad printing, letter press, thermo-transfer printing and/or any combination thereof. It is also preferred to use other printing methods comprising but not limited to foil transfer methods like hot stamping or cold foil printing and/or other coating processes, e.g., physical or chemical vapor deposition, etching or other transfer methods to apply the patterned electrically conductive areas.

In a further preferred embodiment of the invention, the electrically conductive areas are at least partially covered by at least one non-conductive cover layer selected from a group comprising a paper layer, a foil layer, a lacquer layer, an ink layer, a coating layer and/or any combinations thereof. These cover layers have shown to protect the electrically conductive components of the information carrier according to the present invention. Furthermore, the electrically conductive components are advantageously hidden from view of a user of the information carrier. Therefore, the electrically components are difficult to recognize for potential forgers, so that abuse and forgery are effectively prevented by the application of additional cover layers.

In a further aspect, the invention relates to a system comprising a touch screen which comprises intersection points formed from driving electrodes and sensing electrodes and a capacitive information carrier. It is particularly preferred that the grounding is substantially effected by the capacitive interaction between the electrically conductive areas of the self-grounding information carrier and the electrodes of the touch screen by bringing the information carrier into contact with the touch screen. In the context of the present invention, this preferably means that a grounding of the capacitive information carrier is carried out by a capacitive interaction between the electrically conductive pattern and the driving and sensing electrodes of the touch screen.

In a further aspect, the invention relates to a use of the system and/or a use of the capacitive information carrier wherein the capacitive information carrier is grounded by bringing the capacitive information carrier into contact with the touch screen, wherein the grounding is substantially effected by the capacitive interaction between the electrically conductive areas of the information carrier and the electrodes of the touch screen.

In a further preferred embodiment of the invention, the information carrier is placed entirely on the touch screen device.

### Application examples:

In the following, application example for a self-grounding capacitive information carrier according to the present invention will be described:

### First application example:

The first application example represents a basic embodiment of the present invention comprising two touch-inducing areas, which are connected by one connecting line. It is preferred that the touch-inducing areas correspond to subsections of the first electrically conductive area and that the connecting line corresponds to a sub-section of the second electrically conductive area of the self-grounding information carrier. Compared to state-of-the-art touch patterns, the information pattern according to the present invention does not need a coupling area for coupling-in the body capacitance of a human user. Preferably, the sub-sections of the first electrically conductive area are arranged on an electrically non-conductive substrate. Preferably, these touch points are made from electrically conductive material, e.g., electrically conductive ink applied by a printing process or an electrically conductive foil material applied by a foil transfer method. Preferably, the electrically conductive information pattern can be applied on flat objects, e.g., on cards, or on spatial, 3D-shaped objects, e.g., packages or the like.

In the context of the first application example, the size of the sub-sections of the first electrically conductive area is preferably similar to the size of a fingertip, i.e., with dimensions in a range of 1 to 20 mm, more preferred in a range of 6 to 10 mm and most preferred in a range of 7 to 9 mm. Furthermore, it is preferred that the shape of the touch-inducing areas, i.e., the sub-sections of the first electrically conductive area, has one symmetry axis. Preferably, the sub-sections of the first electrically conductive area have a shape selected from a group comprising circles, ellipses, squares, polygons, stars, rectangles, flowers, donuts, clouds, any free form and/or any combination thereof without being limited to these shapes. It is preferred that the electrically conductive connecting line connects both touch points of the embodiment according to the first application example described in this paragraph.

### Second application example:

A second application example comprises at least three sub-sections of the first electrically conductive area, i.e., touch points. These touch-inducing areas are preferably connected by sub-sections of the second electrically conductive area, i.e., the connecting lines of the information pattern. Advantageously, the materials, production methods and basic dimensions mentioned in the first application example are also applicable for the second application example. It is preferred that the touch points are arranged so that they cover at least two different intersection points formed by the driving and sensing lines. Surprisingly, the arrangement of the touch points according to the second application example can be designed in a way that the overlapping of the touch points with different intersection points is independent of the relative angle of the electrically conductive information pattern on the touch screen. In other words, the self-grounding effect advantageously occurs independently from the position where the capacitive information carrier is in contact with a touch screen. In the context of the present invention, this preferably means that different intersection points are covered in every single rotation which the information carrier may perform on the touch screen. This is surprisingly possible due to the preferred self-grounding design and arrangement of the electrically conductive areas on the non-conductive substrate.

In the following, preferred embodiments and application examples of the present invention will be illustrated and described by the following drawings:
- Figure 1A:: Preferred embodiment of the self-grounding capacitive information carrier according application example 1 of the present invention
- Figure 1 B:: Preferred embodiment of a self-grounding information carrier with an information pattern according to application example 1 arranged on a touch screen
- Figure 2:: Preferred embodiment of a self-grounding information according to application example 1 with a curved connecting line arranged on a touch screen
- Figure 3A:: Preferred embodiment of the self-grounding capacitive information carrier according to application example 2 of the present invention arranged on a touch screen
- Figure 3B:: Alternative arrangement of a preferred embodiment of the self-grounding capacitive information carrier with an information pattern according to application example 2 on a touch screen
- Figure 3C:: Additional alternative arrangement of a preferred embodiment of the self-grounding capacitive information carrier with an information pattern according to application example 2 on a touch screen
- Figure 4:: Three-dimensional view of a preferred embodiment of a self-grounding capacitive information carrier with an information pattern with three sub-sections of the first electrically conductive area arranged on a touch screen
- Figure 5A to 5F:: Various preferred embodiments of the self-grounding capacitive information carrier comprising different information patterns according to the present invention.

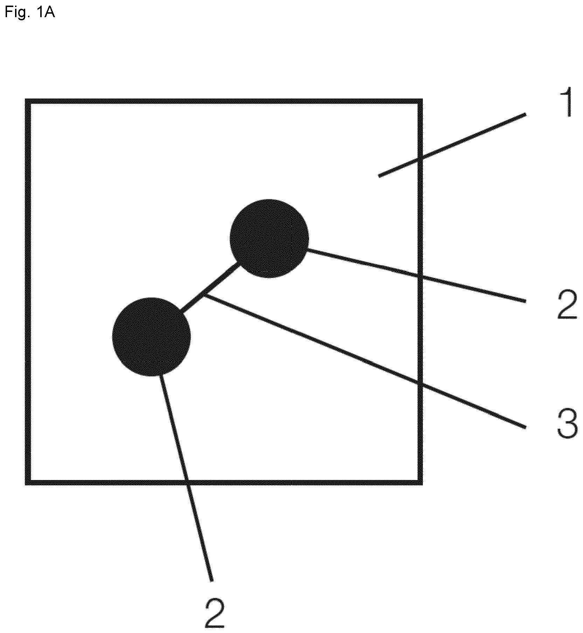

Figure 1A shows a preferred embodiment of the self-grounding capacitive information carrier according to the present invention comprising an electrically non-conductive substrate material 1 and sub-sections of a first electrically conductive area 2. The sub-sections of the first electrically conductive area 2 are connected by a sub-section of the second electrically conductive area 3 which is also referred to as connecting line or conductive trace in the context of the present invention. Preferably, in the case of two sub-sections of a first electrically conductive area 2, there is only one sub-section of the second electrically conductive area 3, so that this one sub-section of the second electrically conductive area 3 represents the total second electrically conductive area.

The sub-sections of the first 2 and the second 3 electrically conductive area form the information pattern in which information is encoded. Preferably, the information is encoded by the shape, geometry, size and/or arrangement of the components of the information pattern, i.e., the sub-sections of the first 2 and the second 3 electrically conductive area. In the context of the invention, the information is preferably encoded by sub-sections of the first electrically conductive area, in particular by their arrangement, position, distance to each other, size, shape, numbers, geometry and/ or the angles which are enclosed by virtual lines connecting the touch points. The information pattern shown in figure 1A represents the first application example of a self-grounding capacitive information carrier according to the present invention.

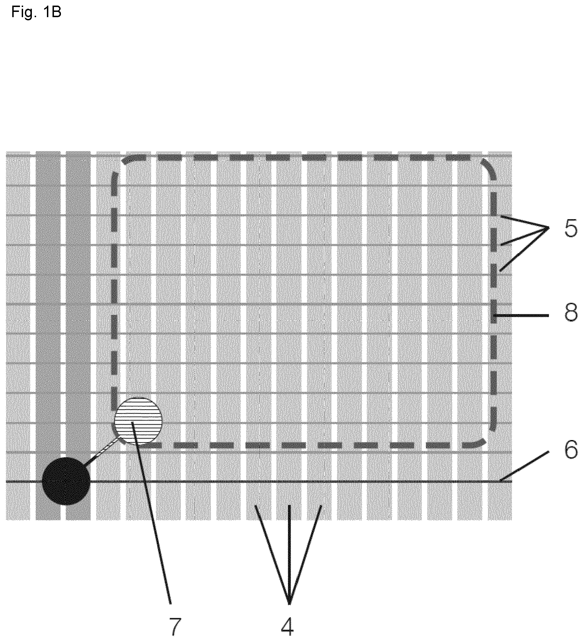

Figure 1B shows a preferred embodiment of an arrangement of an information pattern according to application example 1 of a self-grounding capacitive information carrier on a touch screen. Figure 1B shows two sub-sections of the first electrically conductive area, i.e., two touch points. A black touch point (without reference sign) is arranged on top of an active driving line 6, whereas another touch point 7 is arranged on at least one other inactive driving line 5. The information carrier itself and the electrically non-conductive substrate material are not shown in figure 1 for clarity reasons. Figure 1B shows a touch screen comprising sensing electrodes 4 and driving electrodes 5. In particular, figure 1B shows a state of a self-grounding information carrier at a defined time with one active driving electrode 6. The area 8 where electrically conductive areas 7 can potentially contribute to grounding is marked with dashed line. The size of the area contributing to grounding depends on the number of sensing electrodes 4 and driving electrodes 5 which are covered by components of the information pattern and/or the arrangement of the information pattern on the touch screen. The sub-section of the first electrically conductive area which contributes to the grounding of the self-grounding information carrier is marked by the reference sign 7. It is depicted with a hatching, as well as a part of the connecting line 3 which is arranged within the area 8 contributing to grounding.

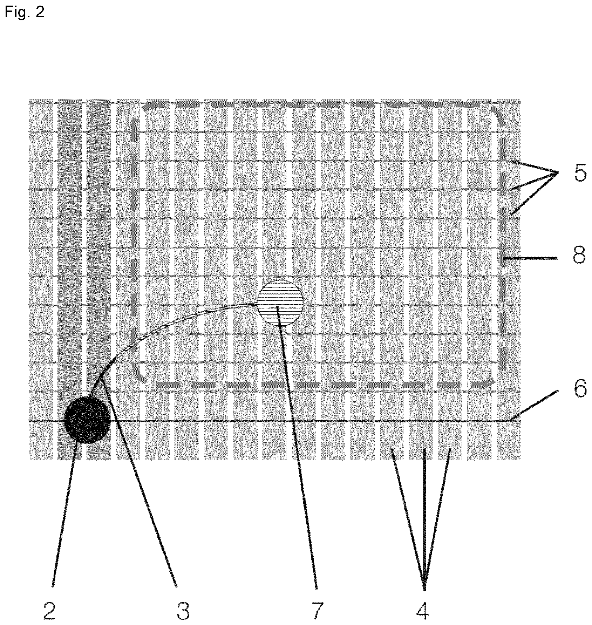

Figure 2 also shows a preferred embodiment of an information pattern with two sub-sections of the first electrically conductive area 2, 7, preferably representing application example 1. In the example shown in figure 2, the two touch points 2, 7 of the information pattern are connected with a curved connecting line 3. Compared to the straight connecting line 3 of figure 1A, the curved connecting line 3 of figure 2 is longer, therefore covering a larger distance and comprising a larger amount of electrically conductive material. In figure 2, the driving electrode which is active is marked with the reference number 6. The touch point depicted with a hatching is marked with reference sign 7. This touch point 7 and the part of the connecting line 3 which is hatched contribute to the grounding. It can be seen in figure 2, that the dashed touch point 7 covers three sensing electrodes 4 and one driving electrode 5. Compared to the information pattern shown in Fig 1B, in particular to the straight connecting line 3 used in that embodiment, it is clear that a curved connecting line 3 increases the grounding effect as a larger area 7 contributes to the grounding. The black touch point 2 covers two sensing electrodes 4 and one driving electrode which is referred to as active driving electrode 6.

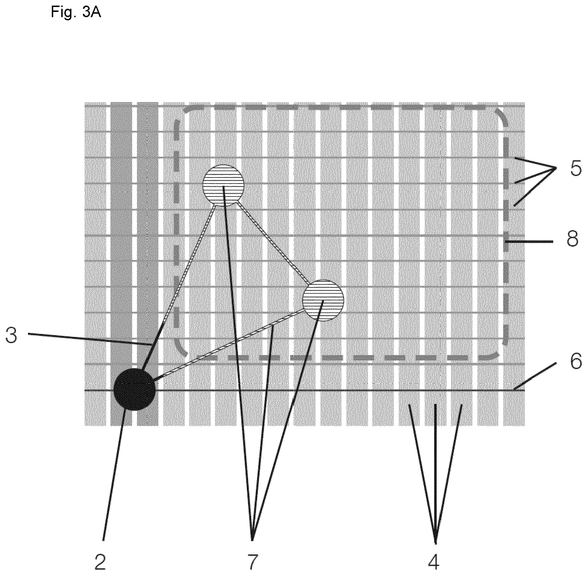

Figure 3A shows a preferred embodiment of an information pattern according to application example 2 comprising three touch points 2, 7. In figure 3A, the black touch point 2 covers the active driving electrode 6 and two sensing electrodes 4. In particular, the black touch point 2 covers an intersection point of these sensing electrodes 4 and the active driving electrode 6. These electrodes limit the area 8 in which the components of the information pattern present in this area 7 contribute to the grounding of the self-grounding capacitive information carrier. Figure 3A shows a particular state of the interaction of a self-grounding information carrier with a touch screen at a defined time with one active driving electrode **6.**

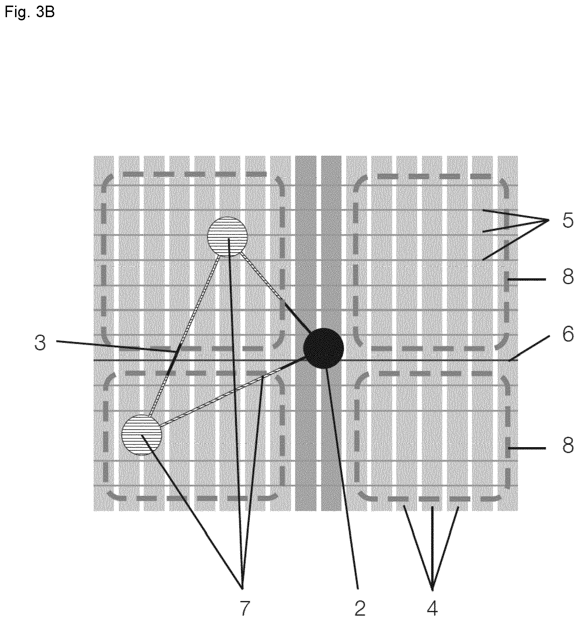

Figure 3B shows a preferred embodiment of a second state of the capacitive information carrier at a second time point where a different driving electrode is currently the active driving electrode **6.** By having a different active driving electrode **6,** a different intersection point is formed from the currently active driving electrode **6** and sensing electrodes **4.** This intersection point is covered by the black touch point **2.** At this second time point, different areas **8** compared to Fig 3A are spanned. In the example shown in figure 3B, four areas **8** are shown in which components of the information pattern may be located in order to potentially contribute to the grounding of the information carrier. Two of the three sub-sections of the first electrically conductive area **7** are located in areas **8** contributing to a grounding of the information carrier. The three touch points **2, 7** of the information pattern are connected by sub-sections of the second electrically conductive area **3.** Each connecting line **3** comprises a part that contributes to the grounding of the information carrier, which is depicted with a hatching. In other words, this is the case when parts of the connecting lines **3** are located in the areas **8** contributing to the grounding. Some parts of the connecting lines **3** are not located within these grounding areas **8.** They do therefore not contribute to the grounding of the information carrier. These parts are depicted black.

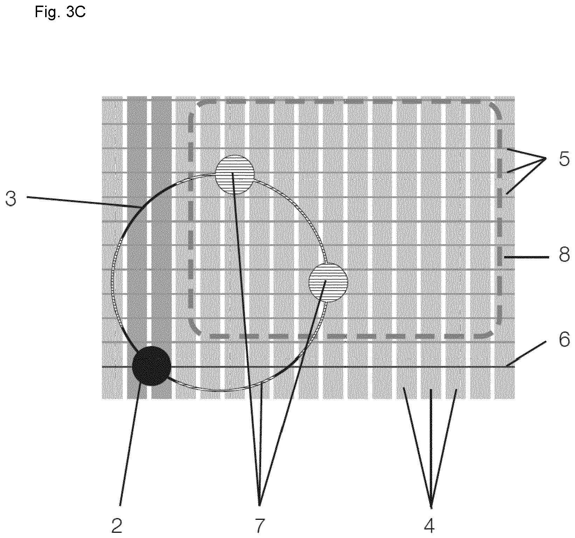

Figure 3C shows a further preferred embodiment of the self-grounding capacitive information carrier, in particular a representative of application example 2. Figure 3C shows an information pattern with three touch points **2, 7,** wherein one touch point **2** is located on top of an active driving electrode **6** and two sensing electrodes **4.** By these electrodes, a grounding area **8** is spanned in which certain components of the information pattern are located which contribute to the grounding of the information carrier. These components of the information pattern are marked with reference sign 7. The three sub-sections of the first electrically conductive area **2, 7** are connected by three connecting lines **3.** These connecting lines comprise parts contributing to the grounding of the information carrier, which are marked with a hatching, and parts that do not contribute to the grounding, depicted black. Figure 3C shows circular connecting lines **3** wherethrough additional sections of the touch screen, which contribute to the grounding effect, are addressed.

Figure 3C shows a preferred embodiment of the information pattern where each connecting line **3** connects two sub-sections of the first electrically conductive area **2, 7.** In the context of the present invention, the connecting lines **3** shown in figure 3C can be referred to as "curved". When using curved connecting lines in order to connect two touch points **2, 7,** the length of said connecting line will be longer than a corresponding straight connecting line between the same sub-sections of the first electrically conductive area. Because of the greater length of the connecting line within the grounding area **8** and the greater amount of electrically conductive material respectively, the area **7** contributing to grounding is larger compared to the use of straight connecting lines.

It can further be seen that additional areas contribute to the grounding which do not appear if straight connecting lines are used. This is due to the effect that curved connection lines **3** are placed on further driving **5** and sensing electrodes **4** that would not be covered by straight connecting lines.

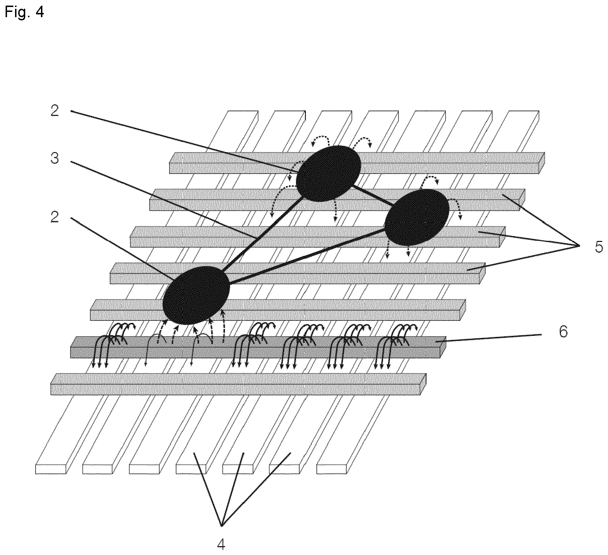

Figure 4 shows a three-dimensional view of a preferred embodiment of the self-grounding capacitive information carrier comprising an information pattern with three subsections of the first electrically conductive area **2.** The three sub-sections of the first electrically conductive area **2** are connected by three connecting lines **3.** Figure 4 shows the information pattern, whereas the electrically non-conductive substrate material is not shown for clarity reasons. The horizontal bars represent the driving electrodes **5.** The bars, which are arranged perpendicularly to these first bars, represent the sensing electrodes **4** of the touch screen. The figure shows the information pattern, which is arranged on the touch screen at a certain point in time, when one of the touch points is located on top of the currently active driving electrode **6.**

In figure 4, electrical charges are indicated by small arrows. These arrows indicate that electrical charges are "stolen" by the touch point, which is located on top of the active driving electrode **6.** This leads to a decrease of the capacity at the intersection point of the currently active driving electrode **6** and the sensing electrodes **4,** which are located underneath the touch point on top of said driving and sensing electrodes. This decrease is detected by the touch controller. In the context of the present invention, this means that the electrical potential of the touch point, which is located on top of the active driving electrode **6,** is changed. As the components of the information pattern are electrically or galvanically linked to each other by the connecting lines **3,** the electrical potential of the whole information pattern is changed. The information pattern has a capacitive coupling to ground, in particular by those touch points which are not located on top of the active driving electrode **6.** In particular, the touch points which are located on top of non-active driving lines **5** contribute to the grounding of the information carrier. They are located within the virtual grounding area **8** which is not shown in figure 4. It is noted that this grounding process works best if the touch points of the information pattern are located on different intersection points of different driving electrodes **5** and sensing electrodes **4.** Furthermore, the connecting lines which are not located on top of the intersection point between the currently active driving electrode and sensing electrodes contributes to the grounding.

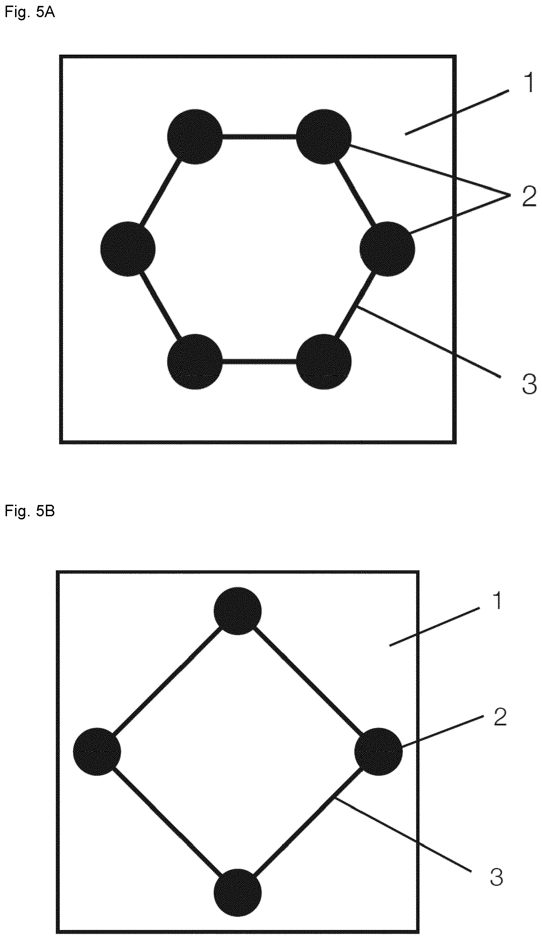

Figures 5A to 5F show preferred embodiments of the self-grounding capacitive information carrier according to the present invention. The figures show embodiments of the information pattern with alternating numbers of touch points **2** and connecting lines **3,** curved and straight connecting lines **3,** regular and irregular shapes of the information pattern and information pattern which comprise a closed arrangement of touch points **2** or an open arrangement, such as a line of touch points **2** and connecting lines **3.**

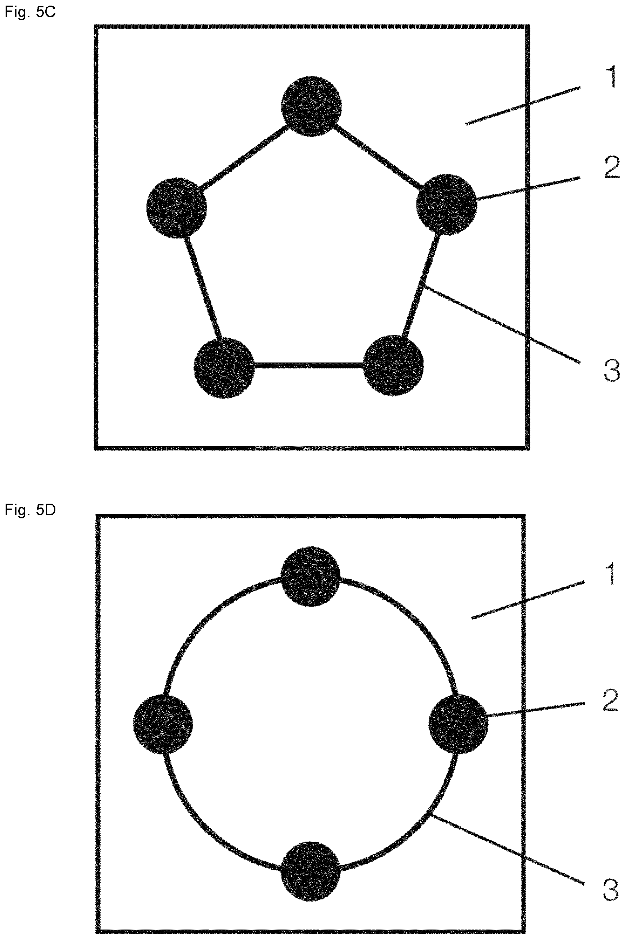

In particular, figure 5A shows an information pattern with six touch points **2** and six connection lines **3.** Figure 5B shows an alternative information pattern with four touch points **2** and four connecting lines **3.** Figure 5C shows a further alternative information pattern comprising five sub-sections of the first **2** and the second **3** electrically conductive areas. It is noted that the connecting lines **3** in the figures 5A to 5C are straight. Figure 5D shows a preferred embodiment of the information pattern with four touch points and four curved connecting lines **3.** It is noted that the arrangement of the touch points **2** of figures 5B and 5D are the same. The difference between the two information patterns is the design of the connecting lines **3** which are straight in the case of figure 5B and which are curved in the case of figure 5D. Comparing the lengths of the connecting lines **3,** it is noted that the connecting lines of figure 5D are longer compared to the connecting lines **3** of figure 5B. This is due to the fact that a direct and straight connection between two points in space will always be the shortest connection between these points. Other connections, for example a curved connection as shown in figure 5D, will be longer compared to that straight connection. The difference in length effects a different for the grounding effect of the information pattern as the length of the connecting lines **3** determines the amount of electrically conductive material within the grounding area **8.** A larger amount of electrically conductive material leads to an enhanced grounding effect.

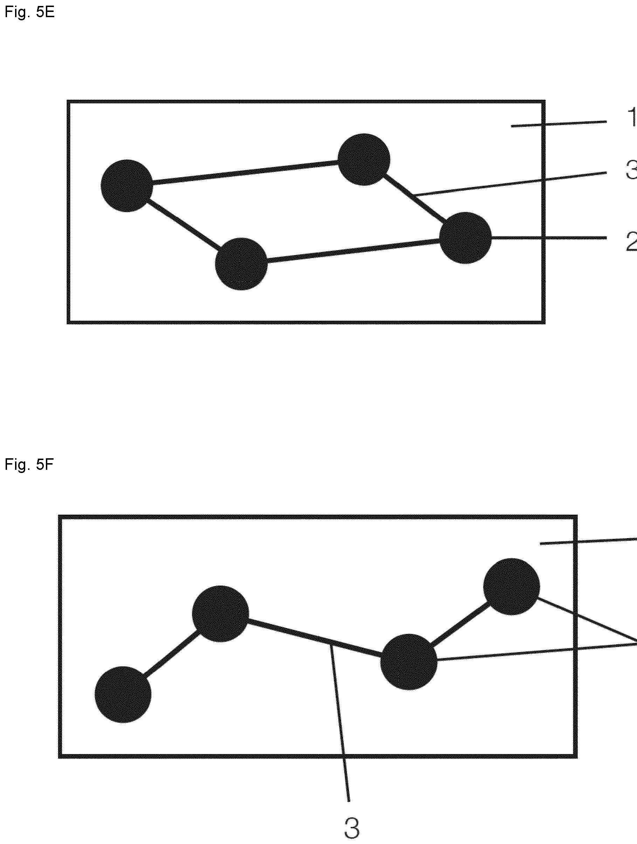

Figures 5E and 5F show alternative information patterns with four touch points **2** each. In the case of figure 5E, the touch points **2** are connected with four connecting lines **3** so that a quadrangular area is enclosed by the four connecting lines **3.** In the case of figure 5F, the four touch points **2** are connected by three connecting lines **3** so that the information pattern forms a row of alternately touch points **2** and connecting lines **3.** The connecting lines in figures 5E and 5F are straight. Figure 5E shows a closed circuit pattern. Figure 5F shows a pattern which is not closed and has a starting point and an ending point. It is referred to a pattern which is not closed as an "open" pattern.

### Reference signs:

- 1: Non-conductive substrate
- 2: Sub-section of the first electrically conductive area
- 3: Sub-section of the second electrically conductive area
- 4: sensing electrodes of the touch sensor
- 5: driving electrodes of the touch sensor
- 6: currently "active" driving electrode
- 7: subsection of an electrically conductive area contributing to grounding
- 8: area on touch screen, where electrically conductive areas can potentially contribute to grounding

## Claims

1. Capacitive information carrier in which information is encoded by an information pattern comprising a first and a second electrically conductive area on an electrically non-conductive substrate (1), wherein each conductive area comprises one or more sub-sections (2, 3), wherein said information is detectable by a capacitive touch screen comprising intersection points formed from driving electrodes (5) and sensing electrodes (4)
**characterized in that**
at least one sub-section (3) of the second electrically conductive area connects at least two sub-sections (2) of the first electrically conductive area and the at least two sub-sections (2) of the first electrically conductive area cover at least two different intersection points of the touch screen when brought into contact with said touch screen, said two different intersection points of the touch screen corresponding to two different driving electrodes (5, 6) of the touch screen, wherein the capacitive information carrier is a self-grounding carrier due to the arrangement of the electrically conductive areas, self-grounding occurring when the driving electrode corresponding to one of said two different intersection points is active and the driving electrode corresponding to the other of said two different intersection points is inactive.

2. Capacitive information carrier according to claim 1
**characterized in that**
at least two sub-sections of the first electrically conductive area (2) are located on top of intersection points formed from at least two different driving electrodes (5) and at least two different sensing electrodes (4).

3. Capacitive information carrier according to claim 1 or 2
**characterized in that**
the capacitive information carrier is grounded by bringing the information carrier into contact with the touch screen, wherein the grounding is substantially effected by the capacitive interaction between the electrically conductive areas of the information carrier and the electrodes (4, 5) of the touch screen.

4. Capacitive information carrier according to one or more of the preceding claims
**characterized in that**
at least one additional electrically conductive element is arranged on the touch screen and wherein said additional electrically conductive element covers at least a further intersection point that is not covered by the first (2) or second (3) electrically conductive area.

5. Capacitive information carrier according to one or more of the preceding claims
**characterized in that**
the information is encoded by the shape, geometry and/or size of the information pattern and/or by the arrangement, distances, numbers and/or relative positions of the sub-sections of the first electrically conductive area (2) on the electrically non-conductive substrate (1).

6. Capacitive information carrier according to one or more of the preceding claims
**characterized in that**
the sub-sections of the first electrically conductive area (2) have dimensions in a preferred range of 1 to 20 mm, more preferred 6 to 10 mm and most preferred 7 to 9 mm.

7. Capacitive information carrier according to one or more of the preceding claims
**characterized in that**
the sub-sections of the first electrically conductive area (2) have at least one symmetry axis.

8. Capacitive information carrier according to one or more of the preceding claims
**characterized in that**
at least one sub-section of the second electrically conductive area (3) has a width in a preferred range of 0.1 - 4.0 mm, more preferred 0.2 - 2.0 mm and most preferred 0.5 - 1.0 mm.

9. Capacitive information carrier according to one or more of the preceding claims
**characterized in that**
at least one sub-section of the second electrically conductive area (3) is straight and/or curved.

10. Capacitive information carrier according to one or more of the preceding claims
**characterized in that**
the capacitive information carrier is a flat or a spatial object.

11. Capacitive information carrier according to one or more of the preceding claims
**characterized in that**
the first (2) and second (3) electrically conductive area are applied on an electrically non-conductive substrate (1) by printing processes and/or foil transfer methods.

12. Capacitive information carrier according to one or more of the preceding claims
**characterized in that**
the electrically conductive areas are at least partially covered by at least one non-conductive cover layer selected from a group comprising a paper layer, a foil layer, a lacquer layer, an ink layer, a coating layer and/or any combinations thereof.

13. System comprising a touch screen comprising intersection points formed from driving electrodes (5) and sensing electrodes (4) and a capacitive information carrier according to claim 1.

14. Use of the system according to claim 13 and/or of the capacitive information carrier according to one or more of claims 1 to 12
**characterized in that**
the capacitive information carrier is grounded by bringing the capacitive information carrier into contact with the touch screen, wherein the grounding is substantially effected by the capacitive interaction between the electrically conductive areas of the information carrier and the electrodes (4, 5) of the touch screen.

15. Use according to claim 14
**characterized in that**
the information carrier is placed entirely on the touch screen device.

## Patentansprüche

1. Kapazitiver Informationsträger, in dem Informationen durch ein Informationsmuster codiert sind, das einen ersten und einen zweiten elektrisch leitfähigen Bereich auf einem elektrisch nicht-leitfähigen Substrat (1) umfasst, wobei jeder leitfähige Bereich einen oder mehrere Unterabschnitte (2, 3) umfasst, wobei die Informationen durch einen kapazitiven Touchscreen erfassbar sind, der Schnittpunkte umfasst, die aus Antriebselektroden (5) und Sensorelektroden (4) gebildet sind,
**dadurch gekennzeichnet, dass**
mindestens ein Unterabschnitt (3) des zweiten elektrisch leitfähigen Bereichs mindestens zwei Unterabschnitte (2) des ersten elektrisch leitfähigen Bereichs verbindet und die mindestens zwei Unterabschnitte (2) des ersten elektrisch leitfähigen Bereichs mindestens zwei unterschiedliche Schnittpunkte des Touchscreens abdecken, wenn sie mit dem Touchscreen in Kontakt gebracht sind, wobei die zwei unterschiedlichen Schnittpunkte des Touchscreens zwei unterschiedlichen Antriebselektroden (5, 6) des Touchscreens entsprechen, wobei der kapazitive Informationsträger aufgrund der Anordnung der elektrisch leitfähigen Bereiche ein selbsterdender Träger ist, wobei Selbsterdung eintritt, wenn die Antriebselektrode, die einem der zwei unterschiedlichen Schnittpunkte entspricht, aktiv ist und die Antriebselektrode, die dem anderen der zwei unterschiedlichen Schnittpunkte entspricht, inaktiv ist.

2. Kapazitiver Informationsträger nach Anspruch 1,
**dadurch gekennzeichnet, dass**
mindestens zwei Unterabschnitte des ersten elektrisch leitfähigen Bereichs (2) auf Schnittpunkten angeordnet sind, die aus mindestens zwei unterschiedlichen Antriebselektroden (5) und mindestens zwei unterschiedlichen Sensorelektroden (4) gebildet sind.

3. Kapazitiver Informationsträger nach Anspruch 1 oder 2,
**dadurch gekennzeichnet, dass**
der kapazitive Informationsträger dadurch geerdet ist, dass der Informationsträger mit dem Touchscreen in Kontakt gebracht ist, wobei die Erdung im Wesentlichen durch die kapazitive Wechselwirkung zwischen den elektrisch leitfähigen Bereichen des Informationsträgers und den Elektroden (4, 5) des Touchscreens bewirkt ist.

4. Kapazitiver Informationsträger nach einem oder mehrere der vorstehenden Ansprüche,
**dadurch gekennzeichnet, dass**
mindestens ein zusätzliches elektrisch leitfähiges Element auf dem Touchscreen angeordnet ist und wobei das zusätzliche elektrisch leitfähige Element mindestens einen weiteren Schnittpunkt abdeckt, der nicht durch den ersten (2) oder zweiten (3) elektrisch leitfähigen Bereich abgedeckt ist.

5. Kapazitiver Informationsträger nach einem oder mehrere der vorstehenden Ansprüche,
**dadurch gekennzeichnet, dass**
die Informationen durch die Form, Geometrie und/oder Größe des Informationsmusters und/oder durch die Anordnung, Abstände, Anzahl und/oder Relativpositionen der Unterabschnitte des ersten elektrisch leitfähigen Bereichs (2) auf dem elektrisch nicht-leitfähigen Substrat (1) codiert sind.

6. Kapazitiver Informationsträger nach einem oder mehrere der vorstehenden Ansprüche,
**dadurch gekennzeichnet, dass**
die Unterabschnitte des ersten elektrisch leitfähigen Bereichs (2) Abmessungen in einem bevorzugten Bereich von 1 bis 20 mm, nochmals bevorzugt 6 bis 10 mm und höchst bevorzugt 7 bis 9 mm aufweisen.

7. Kapazitiver Informationsträger nach einem oder mehrere der vorstehenden Ansprüche,
**dadurch gekennzeichnet, dass**
die Unterabschnitte des ersten elektrisch leitfähigen Bereichs (2) mindestens eine Symmetrieachse aufweisen.

8. Kapazitiver Informationsträger nach einem oder mehrere der vorstehenden Ansprüche,
**dadurch gekennzeichnet, dass**
mindestens ein Unterabschnitt des zweiten elektrisch leitfähigen Bereichs (3) eine Breite in einem bevorzugten Bereich von 0,1-4,0 mm, nochmals bevorzugt 0,2-2,0 mm und höchst bevorzugt 0,5-1,0 mm aufweist.

9. Kapazitiver Informationsträger nach einem oder mehrere der vorstehenden Ansprüche,
**dadurch gekennzeichnet, dass**
mindestens ein Unterabschnitt des zweiten elektrisch leitfähigen Bereichs (3) gerade und/oder gekrümmt ist.

10. Kapazitiver Informationsträger nach einem oder mehrere der vorstehenden Ansprüche,
**dadurch gekennzeichnet, dass**
der kapazitive Informationsträger ein flaches oder ein räumliches Objekt ist.

11. Kapazitiver Informationsträger nach einem oder mehrere der vorstehenden Ansprüche,
**dadurch gekennzeichnet, dass**
der erste (2) und zweite (3) elektrisch leitfähige Bereich auf einem elektrisch nicht-leitfähigen Substrat (1) durch Druckprozesse und/oder Folienübertragungsverfahren aufgebracht sind.

12. Kapazitiver Informationsträger nach einem oder mehrere der vorstehenden Ansprüche,
**dadurch gekennzeichnet, dass**
die elektrisch leitfähigen Bereiche mindestens teilweise durch mindestens eine nicht-leitfähige Deckschicht abgedeckt sind, die aus einer Gruppe ausgewählt ist, die eine Papierschicht, eine Folienschicht, eine Lackschicht, eine Tintenschicht, eine Beschichtungsschicht und/oder jegliche Kombinationen davon umfasst.

13. System, das einen Touchscreen, der Schnittpunkte umfasst, die aus Antriebselektroden (5) und Sensorelektroden (4) gebildet sind, und einen kapazitiven Informationsträger nach Anspruch 1 umfasst.

14. Verwendung des Systems nach Anspruch 13 und/oder des kapazitiven Informationsträgers nach einem der Ansprüche 1 bis 12,
**dadurch gekennzeichnet, dass**
der kapazitive Informationsträger dadurch geerdet wird, dass der kapazitive Informationsträger mit dem Touchscreen in Kontakt gebracht wird, wobei die Erdung im Wesentlichen durch die kapazitive Wechselwirkung zwischen den elektrisch leitfähigen Bereichen des Informationsträgers und den Elektroden (4, 5) des Touchscreens bewirkt wird.

15. Verwendung nach Anspruch 14,
**dadurch gekennzeichnet, dass**
der Informationsträger vollständig auf der Touchscreenvorrichtung platziert wird.

## Revendications

1. Support d'informations capacitif, dans lequel des informations sont codées par un motif d'informations comprenant une première et une seconde zone électroconductrice sur un substrat non électroconducteur (1), dans lequel chaque zone conductrice comprend une ou plusieurs sous-sections (2, 3), dans lequel lesdites informations sont détectables par un écran tactile capacitif comprenant des points d'intersection formés à partir d'électrodes de commande (5) et d'électrodes de détection (4),
**caractérisé en ce que**
au moins une sous-section (3) de la seconde zone électroconductrice connecte au moins deux sous-sections (2) de la première zone électroconductrice et les au moins deux sous-sections (2) de la première zone électroconductrice recouvrent au moins deux points d'intersection différents de l'écran tactile lorsqu'elles sont mises en contact avec ledit écran tactile, lesdits deux points d'intersection différents de l'écran tactile correspondant aux deux électrodes de commande différentes (5, 6) de l'écran tactile, dans lequel le support d'informations capacitif est un support de mise à la terre autonome en raison de l'agencement des zones électroconductrices, la mise à la terre autonome survenant lorsque l'électrode de commande, correspondant à un desdits deux points d'intersection différents, est active et l'électrode de commande, correspondant à l'autre desdits deux points d'intersection différents, est inactive.

2. Support d'informations capacitif selon la revendication 1,
**caractérisé en ce que**
au moins deux sous-sections de la première zone électroconductrice (2) sont situées au sommet de points d'intersection formés à partir d'au moins deux électrodes de commande différentes (5) et d'au moins deux électrodes de détection différentes (4).

3. Support d'informations capacitif selon la revendication 1 ou 2,
**caractérisé en ce que**
le support d'informations capacitif est mis à la terre en mettant le support d'informations en contact avec l'écran tactile, dans lequel la mise à la terre est sensiblement effectuée par l'interaction capacitive entre les zones électroconductrices du support d'informations et les électrodes (4, 5) de l'écran tactile.

4. Support d'informations capacitif selon une ou plusieurs des revendications précédentes,
**caractérisé en ce que**
au moins un élément électroconducteur supplémentaire est agencé sur l'écran tactile et dans lequel ledit élément électroconducteur supplémentaire recouvre au moins un autre point d'intersection qui n'est pas recouvert par la première (2) ou la seconde (3) zone électroconductrice.

5. Support d'informations capacitif selon une ou plusieurs des revendications précédentes,
**caractérisé en ce que**
les informations sont codées par la forme, la géométrie et/ou la taille du motif d'informations et/ou par l'agencement, les distances, les nombres et/ou les positions relatives des sous-sections de la première zone électroconductrice (2) sur le substrat non électroconducteur (1).

6. Support d'informations capacitif selon une ou plusieurs des revendications précédentes,
**caractérisé en ce que**
les sous-sections de la première zone électroconductrice (2) présentent des dimensions dans une plage préférée de 1 à 20 mm, davantage préférée de 6 à 10 mm et la plus préférée de 7 à 9 mm.

7. Support d'informations capacitif selon une ou plusieurs des revendications précédentes,
**caractérisé en ce que**
les sous-sections de la première zone électroconductrice (2) présentent au moins un axe de symétrie.

8. Support d'informations capacitif selon une ou plusieurs des revendications précédentes,
**caractérisé en ce que**
au moins une sous-section de la seconde zone électroconductrice (3) présente une largeur dans une plage préférée de 0,1 à 4,0 mm, davantage préférée de 0,2 à 2,0 mm et la plus préférée de 0,5 à 1,0 mm.

9. Support d'informations capacitif selon une ou plusieurs des revendications précédentes,
**caractérisé en ce que**
au moins une sous-section de la seconde zone électroconductrice (3) est droite et/ou incurvée.

10. Support d'informations capacitif selon une ou plusieurs des revendications précédentes,
**caractérisé en ce que**
le support d'informations capacitif est un objet plan ou un objet spatial.

11. Support d'informations capacitif selon une ou plusieurs des revendications précédentes,
**caractérisé en ce que**
la première (2) et la seconde (3) zone électroconductrice sont appliquées sur un substrat non électroconducteur (1) par des processus d'impression et/ou des procédés de transfert de feuille.

12. Support d'informations capacitif selon une ou plusieurs des revendications précédentes,
**caractérisé en ce que**
les zones électroconductrices sont recouvertes au moins en partie par au moins une couche de couverture non conductrice sélectionnée parmi un groupe comprenant une couche de papier, une couche de feuille, une couche de laque, une couche d'encre, une couche de revêtement et/ou toute combinaison de celles-ci.

13. Système comprenant un écran tactile comprenant des points d'intersection, formés à partir d'électrodes de commande (5) et d'électrodes de détection (4), et un support d'informations capacitif selon la revendication 1.

14. Utilisation du système selon la revendication 13 et/ou du support d'informations capacitif selon une ou plusieurs des revendications 1 à 12,
**caractérisé en ce que**
le support d'informations capacitif est mis à la terre en mettant le support d'informations capacitif en contact avec l'écran tactile, dans lequel la mise à la terre est sensiblement effectuée par l'interaction capacitive entre les zones électroconductrices du support d'informations et des électrodes (4, 5) de l'écran tactile.

15. Utilisation selon la revendication 14,
**caractérisé en ce que**
le support d'informations est entièrement placé sur le dispositif d'écran tactile.
